(19) **Europäisches Patentamt** / **European Patent Office** / **Office européen des brevets**

(11) **EP 4 707 871 A1**

(12) # EUROPEAN PATENT APPLICATION

(43) Date of publication:
**11.03.2026 Bulletin 2026/11**

(21) Application number: **25197777.3**

(22) Date of filing: **25.08.2025**

(51) International Patent Classification (IPC):
**G01S 19/41** (2010.01)     **G01S 19/43** (2010.01)
**G01S 19/04** (2010.01)     **G01S 19/07** (2010.01)

(52) Cooperative Patent Classification (CPC):
**G01S 19/43; G01S 19/41; G01S 19/426;**
G01S 19/04; G01S 19/07

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **09.09.2024 JP 2024154982**

(71) Applicant: **Kubota Corporation**
**Osaka-shi, Osaka 556-8601 (JP)**

(72) Inventors:
• **CHABATA, Akira**
**SAKAI-SHI, OSAKA, 5900908 (JP)**
• **KATO, Koji**
**SAKAI-SHI, OSAKA, 5900908 (JP)**
• **NAGAMATSU, Toshinobu**
**SAKAI-SHI, OSAKA, 5900908 (JP)**

(74) Representative: **Cabinet Beau de Loménie**
**103, rue de Grenelle / CS 90800**
**75340 Paris Cedex 07 (FR)**

(54) **RTK-GNSS POSITIONING SYSTEM AND RTK-GNSS POSITIONING METHOD**

(57)     There are provided an RTK-GNSS positioning system (1) and an RTK-GNSS positioning method capable of deriving error estimation information for correcting an error of mobile station reception information without using RTK correction information.

An RTK-GNSS positioning system (1) according to an aspect of the present disclosure includes a base station (10) including a first reception unit (11) for receiving base station reception information from a satellite (SAT), a mobile station (20) including a second reception unit (211) for receiving mobile station reception information from a satellite (SAT), a first calculation unit (13) for deriving RTK correction information on the basis of the base station reception information, a second calculation unit (213) for deriving error estimation information for correcting an error of the mobile station reception information on the basis of the RTK correction information and the mobile station reception information, and a storage unit for storing the error estimation information.

Fig. 1

**EP 4 707 871 A1**

**Description**

**TECHNICAL FIELD**

The present disclosure relates to an RTK-GNSS positioning system and an RTK-GNSS positioning method.

**BACKGROUND ART**

RTK-GNSS positioning using an RTK method is known as a technique for implementing highly accurate positioning. In the RTK-GNSS positioning, information (hereinafter, it may be simply referred to as "mobile station reception information") from a satellite received by a mobile station such as an agricultural machine or a construction machine is corrected on the basis of information (hereinafter, it may be simply referred to as "base station reception information") from a satellite received by a base station fixed on the ground, and RTK correction information including information regarding base station coordinates and the like, whereby it is possible to acquire high-precision fixed-time position coordinates of the mobile station having an error of 3 cm or less from actual coordinates of the mobile station. For example, Patent Literature 1 discloses a positioning system that is applied to automatic traveling of a mobile station such as an agricultural machine or a construction machine, and can easily acquire a position of a base station in RTK-GNSS positioning of the mobile station.

**CITATION LIST**

[PATENT LITERATURE]

PATENT LITERATURE 1: Japanese Laid-Open Patent Publication No. 2018-105708

**SUMMARY OF THE INVENTION**

[TECHNICAL PROBLEM]

In automatic traveling of a mobile station such as an agricultural machine or a construction machine, highly accurate position information of the mobile station is required for ensuring safety of a work site such as a farm field or a construction site. In the RTK-GNSS positioning, when the base station becomes unable to receive the base station reception information, the RTK correction information cannot be derived. In this case, the position information of the mobile station cannot be acquired with high accuracy by correction based on the RTK correction information. Further, when the mobile station becomes unable to receive the RTK correction information based on the base station reception information, the position information of the mobile station cannot be acquired with high accuracy by the correction based on the RTK correction information. Thus, in a state where the base station reception information or the RTK correction information is not receivable, an operation of stopping automatic traveling of the mobile station is performed in order to ensure safety of the workplace. The stopping of automatic traveling of the mobile station may cause a decrease in work efficiency in the workplace. In addition, not only for safety reasons, in a state where the base station reception information or the RTK correction information is not receivable, there is a possibility that work accuracy in the workplace is deteriorated.
In order to suppress the stopping of automatic traveling of the mobile station, high-precision positioning using a PPP-RTK method is known. In the positioning using the PPP-RTK method, when the base station becomes unable to receive the base station reception information or when the mobile station becomes unable to receive the RTK correction information based on the base station reception information, the mobile station reception information is corrected on the basis of PPP correction information received from the satellite by the mobile station instead of the RTK correction information, thereby acquiring highly accurate position information of the mobile station. However, when the PPP-RTK method is adopted, it is necessary to additionally arrange a dedicated receiver corresponding to the reception of the PPP correction information in the mobile station, and cost of the positioning system increases.
In view of such conventional problems, an object of the present disclosure is to provide an RTK-GNSS positioning system and an RTK-GNSS positioning method capable of deriving error estimation information for correcting an error of mobile station reception information without using RTK correction information.

[SOLUTION TO PROBLEM]

An RTK-GNSS positioning system according to an aspect of the present disclosure includes a base station including a first reception unit for receiving base station reception information from a satellite, a mobile station including a second reception unit for receiving mobile station reception information from a satellite, a first calculation unit for deriving RTK correction information on the basis of the base station reception information, a second calculation unit for deriving error estimation information for correcting an error of the mobile station reception information without using the RTK correction information on the basis of the RTK correction information and the mobile station reception information, and a storage unit for storing the error estimation information.

An RTK-GNSS positioning method according to another aspect of the present disclosure includes receiving base station reception information and mobile station reception information from a satellite, deriving RTK correction information on the basis of the base station reception information, and deriving error estimation information for correcting an error of the mobile station reception information without using the correction information on the basis of the RTK correction information and the mobile station reception information.

[ADVANTAGEOUS EFFECTS OF THE INVENTION]

According to the present disclosure, it is possible to provide an RTK-GNSS positioning system and an RTK-GNSS positioning method capable of deriving error estimation information for correcting an error of mobile station reception information without using RTK correction information.

BRIEF DESCRIPTION OF DRAWINGS

FIG. 1 is a schematic diagram illustrating an overall configuration of an RTK-GNSS positioning system according to an embodiment of the present disclosure.
FIG. 2 is a conceptual diagram of derivation of positioning information.
FIG. 3 is a conceptual diagram of derivation of error estimation information.
FIG. 4 is a conceptual diagram of derivation of first estimated position information.
FIG. 5 is a conceptual diagram of derivation of second estimated position information.
FIG. 6 is an explanatory diagram illustrating details of Expression I.
FIG. 7 is a conceptual diagram illustrating a relationship between a reception state of RTK correction information of a mobile station and each piece of derived information.
FIG. 8 is a flowchart illustrating a flow of deriving each piece of information illustrated in FIG. 7.
FIG. 9 is an explanatory diagram in a case of preferential adoption of the positioning information as position information of the mobile station.
FIG. 10 is an explanatory diagram in a case of preferential adoption of the first estimated position information as the position information of the mobile station.
FIG. 11 is an explanatory diagram in a case of transition and adoption from the positioning information to the first estimated position information as the position information of the mobile station.
FIG. 12 is a flowchart illustrating a flow of processing executed in S11 of FIG. 8 in the transition and adoption of FIG. 11.
FIG. 13 is an explanatory diagram illustrating derivation of estimated RTK correction information.

DETAILED DESCRIPTION

<Outline of Embodiment of Present Disclosure>

Hereinafter, an outline of embodiments of the present disclosure will be listed and described.

(1) An RTK-GNSS positioning system according to the present embodiment includes:

a base station including a first reception unit for receiving base station reception information from a satellite;
a mobile station including a second reception unit for receiving mobile station reception information from a satellite;
a first calculation unit for deriving RTK correction information on the basis of the base station reception information;
a second calculation unit for deriving error estimation information for correcting an error of the mobile station reception information on the basis of the RTK correction information and the mobile station reception information; and
a storage unit for storing the error estimation information.

With the RTK-GNSS positioning system of the present embodiment, it is possible to derive the error estimation information for correcting an error of the mobile station reception information without using the RTK correction information without additionally arranging a dedicated receiver such as a positioning system using the above-described PPP-RTK method. Therefore, it is possible to provide a positioning system that enables highly accurate acquisition of position information of a mobile station based on information other than the RTK correction information while suppressing an increase in cost.

(2) In the RTK-GNSS positioning system of (1) described above,

the base station may include a transmission unit for transmitting the RTK correction information to the mobile station,
the mobile station may include a third reception unit for receiving the RTK correction information transmitted from the base station, and
the second calculation unit,
in a state where the mobile station is able to receive the RTK correction information transmitted from the base station, may derive positioning information of the mobile station on the basis of the RTK correction information and the mobile station reception information, and
may derive first estimated position information of the mobile station on the basis of the error estimation information derived on the basis of the RTK correction information and the mobile station reception information, and the mobile station reception information, and
in a state where the mobile station is unable to receive the RTK correction information transmitted from the base station,
may derive second estimated position information of the mobile station on the basis of the error estimation information stored in the storage unit and the mobile station reception information.

With the RTK-GNSS positioning system of (2) described above, it is possible to derive highly accurate position information of the mobile station regardless of the reception situation of the first reception unit. Thus, even in a state where the mobile station is unable to receive the RTK correction information transmitted from the base station (hereinafter, it may be simply referred to as a "state where RTK correction information is not receivable"), the mobile station can continue automatic traveling. Therefore, work efficiency and work accuracy in the workplace are improved.

(3) In the RTK-GNSS positioning system of (2) described above,

the second calculation unit,
in a state where the mobile station is able to receive the RTK correction information transmitted from the base station, may adopt the positioning information as position information of the mobile station, and
in a state where the mobile station is unable to receive the RTK correction information transmitted from the base station, may adopt the second estimated position information as the position information of the mobile station.

With the RTK-GNSS positioning system of (3) described above, the accuracy of the position information of the mobile station can be secured in a state where the mobile station is able to receive the RTK correction information transmitted from the base station (hereinafter, it may be simply referred to as a "state where RTK correction information is receivable").

(4) In the RTK-GNSS positioning system of (2) described above,

the second calculation unit,
in a state where the mobile station is able to receive the RTK correction information transmitted from the base station, may adopt the first estimated position information as position information of the mobile station, and
in a state where the mobile station is unable to receive the RTK correction information transmitted from the base station, may adopt the second estimated position information as the position information of the mobile station.

With the RTK-GNSS positioning system of (4) described above, the continuity of the position information of the mobile station at the time of switching between a state where the RTK correction information is receivable and a state where the RTK correction information is not receivable is improved.

(5) In the RTK-GNSS positioning system of (2) described above,

the second calculation unit,
in a state where the mobile station is able to receive the RTK correction information transmitted from the base station, may derive estimated RTK correction information on the basis of the error estimation information,
may derive difference information between the RTK correction information and the estimated RTK correction information,
may adopt the positioning information as position information of the mobile station until the difference information satisfies a predetermined condition, and

after the difference information satisfies the predetermined condition, may adopt the first estimated position information as the position information of the mobile station.

With the RTK-GNSS positioning system of (5) described above, the accuracy and continuity of the position information of the mobile station are improved.

(6) In the RTK-GNSS positioning system according to any one of (1) to (5) described above, the error estimation information may include estimation information of an error with a temporal change.

With the RTK-GNSS positioning system of (6) described above, it is possible to derive the error estimation information with which an error of the mobile station reception information can be accurately corrected.

(7) In the RTK-GNSS positioning system of (6) described above, the error accompanied by the temporal change may include at least an ionospheric delay error and a tropospheric delay error.

With the RTK-GNSS positioning system of (7) described above, it is possible to derive the error estimation information with which the error of the mobile station reception information can be corrected with higher accuracy.

(8) In the RTK-GNSS positioning system according to any one of (1) to (7) described above,

the base station may include the first calculation unit, and
the mobile station may include the second calculation unit and the storage unit.

With the RTK-GNSS positioning system of (8) described above, the system configuration becomes simple, and cost of the positioning system can be reduced.

(9) In the RTK-GNSS positioning system according to any one of (1) to (8) described above, the second calculation unit may derive the error estimation information on the basis of a relational expression illustrated in Expression I,

$$[\text{Observation vector}] = Amn \times [\text{State vector}] + [\text{Noise vector}]\cdots \quad \text{Expression I}$$

(In Expression I,

A is a matrix of m rows and n columns, and
elements of the observation vector include the mobile station reception information, the RTK correction information including the base station reception information and base station coordinates, and fixed-time position coordinates of the mobile station, and
elements of the state vector include at least the error estimation information, and
elements of the noise vector include observation noise).

With the RTK-GNSS positioning system of (9) described above, it is possible to derive the error estimation information with which the error of the mobile station reception information can be accurately corrected.

(10) In the RTK-GNSS positioning system of (9) described above,

the base station reception information may include at least a pseudo-distance and a carrier phase, and
the mobile station reception information may include at least a pseudo-distance, a carrier phase, and satellite coordinates.

With the RTK-GNSS positioning system of (10) described above, it is possible to derive the error estimation information with which the error of the mobile station reception information can be corrected with higher accuracy.

(11) In the RTK-GNSS positioning system of (9) or (10) described above, the error estimation information may include at least an ionospheric delay error and a tropospheric delay error.

With the RTK-GNSS positioning system of (11) described above, it is possible to derive the error estimation information with which the error of the mobile station reception information can be further corrected with higher accuracy.

(12) An RTK-GNSS positioning method according to another embodiment includes:

receiving base station reception information and mobile station reception information from a satellite;
deriving RTK correction information on the basis of the base station reception information; and
deriving error estimation information for correcting an error of the mobile station reception information without using the RTK correction information on the basis of the RTK correction information and the mobile station reception information.

With the RTK-GNSS positioning method according to another embodiment, it is possible to derive the error estimation information for correcting an error of the mobile station reception information without using the RTK correction information without receiving other correction information such as PPP correction information. Therefore, it is possible to derive the correction information as an alternative to the RTK correction information while suppressing an increase in cost.

(13) The RTK-GNSS positioning method of (12) described above may include a step of deriving estimated position information of the mobile station on the basis of the error estimation information and the mobile station reception information.

With the RTK-GNSS positioning method of (13) described above, highly accurate position information of the mobile station can be continuously acquired. Thus, the frequency of stopping automatic traveling of the mobile station is suppressed. Therefore, work efficiency and work accuracy in the workplace are improved.

<Details of Embodiment of Present Disclosure>

Hereinafter, embodiments of the present disclosure will be described in detail with reference to the drawings. Note that at least some of the embodiments described below may be arbitrarily combined.

[Overall Configuration of RTK-GNSS Positioning System]

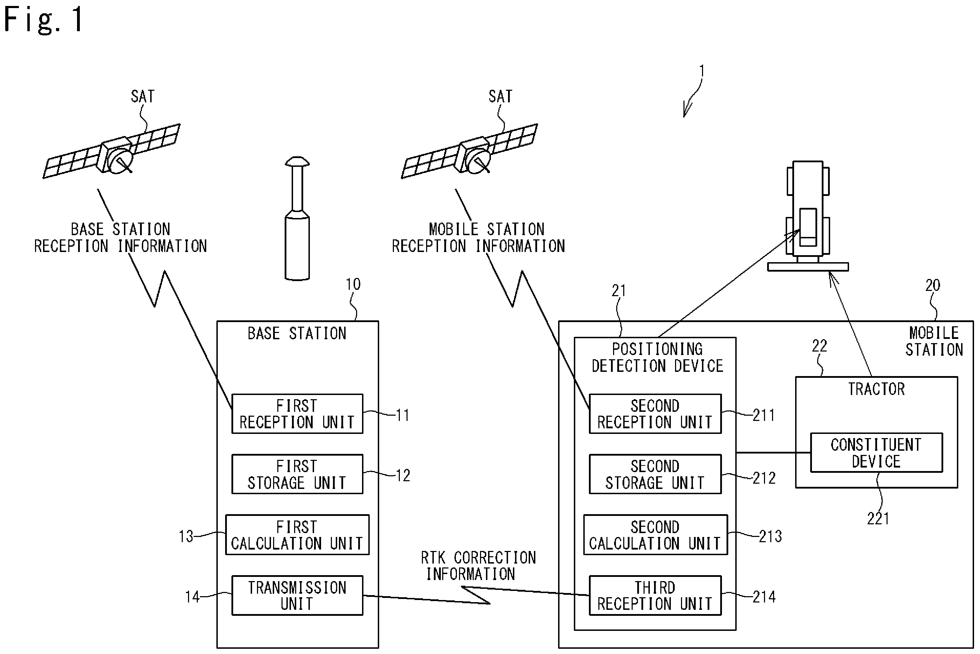

FIG. 1 is a schematic diagram illustrating an overall configuration of an RTK-GNSS positioning system 1 according to an embodiment of the present disclosure. The RTK-GNSS positioning system 1 includes a base station 10 and a mobile station 20. The mobile station 20 of the present embodiment is a tractor 22 including a positioning detection device 21. The tractor 22 is an example of a work vehicle, and the present disclosure is not limited to the tractor 22, and may be other work vehicles such as agricultural machines, construction machines, and utility vehicles.

The base station 10 includes a first reception unit 11, a first storage unit 12, a first calculation unit 13, and a transmission unit 14. The base station 10 is, for example, a fixed base station fixed at a predetermined position. Note that, when a virtual reference point method (network RTK-GNSS positioning) is available, the base station 10 may be a virtual reference point. The first reception unit 11 has a reception function for receiving base station reception information from a satellite SAT. The first storage unit 12 has a storage function for storing a program or the like for deriving RTK correction information on the basis of coordinates (hereinafter, it may be simply referred to as "base station coordinates") at which the base station 10 is fixed, base station reception information, and base station coordinates. The first calculation unit 13 has a calculation function for deriving the RTK correction information on the basis of the program for deriving the RTK correction information. The transmission unit 14 has a transmitting function for transmitting the RTK correction information derived by the first calculation unit 13 to the mobile station 20.

The positioning detection device 21 includes a second reception unit 211, a second storage unit 212, a second calculation unit 213, and a third reception unit 214. The second reception unit 211 has a reception function for receiving mobile station reception information from the satellite SAT. The second storage unit 212 has a storage function for storing error estimation information, a program for deriving position information and the like of the mobile station 20, derived error estimation information, and the like. The second calculation unit 213 has a calculation function for deriving error estimation information, position information of the mobile station 20, and the like on the basis of the program described above. The third reception unit 214 has a reception function for receiving the RTK correction information transmitted from the transmission unit 14.

The tractor 22 is connected to the positioning detection device 21 in a wired or wireless manner. The tractor 22 includes a constituent device 221 for automatic traveling on the basis of the position information of the mobile station 20 from the positioning detection device 21. Note that, for example, as disclosed in Patent Literature 1, a work vehicle including a constituent device for performing automatic traveling on the basis of position information of a mobile station acquired by the RTK-GNSS positioning system is known. As the constituent device 221, the same constituent device as the known work vehicle can be applied.

In the RTK-GNSS positioning system 1, the base station 10 includes a first storage unit 12 and a first calculation unit 13, and the mobile station 20 includes a second storage unit 212 and a second calculation unit 213. Thus, the RTK-GNSS positioning system 1 can construct a system with a simple configuration of the base station 10 and the mobile station 20. However, the RTK-GNSS positioning system of the present disclosure is not limited to this configuration. For example, the RTK-GNSS positioning system of the present disclosure may include a server capable of communicating with the base station 10 and the mobile station 20 in addition to the base station 10 and the mobile station 20. In this case, instead of the base station 10 and the mobile station 20, the server may include a first storage unit 12, a first calculation unit 13, a second storage unit 212, and a second calculation unit 213. Note that, from the viewpoint of cost reduction, a simple configuration illustrated in the RTK-GNSS positioning system 1 is preferable.

[Derivation of Positioning Information]

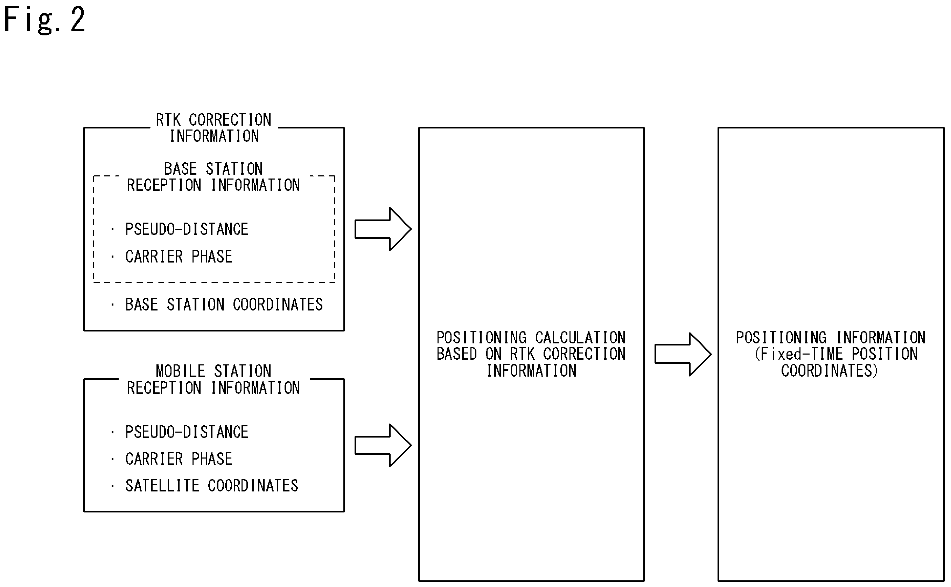

FIG. 2 is a conceptual diagram of derivation of positioning information. The positioning information is derived by the second calculation unit 213 through positioning calculation based on the RTK correction information. The second calculation unit 213 of the present disclosure derives fixed-time position coordinates of the mobile station 20 as the positioning information. In the positioning calculation, the RTK correction information received by the third reception unit 214 and the mobile station reception information received by the second reception unit 211 are used as input information. The RTK correction information used to derive the positioning information includes at least a pseudo-distance and a carrier phase of the base station reception information and base station coordinates. The mobile station reception information used for deriving the positioning information includes at least a pseudo-distance, a carrier phase, and satellite coordinates. Note that, in the present disclosure, the positioning information can be derived by positioning calculation similar to positioning calculation used in known RTK-GNSS positioning.

[Derivation of Error Estimation Information]

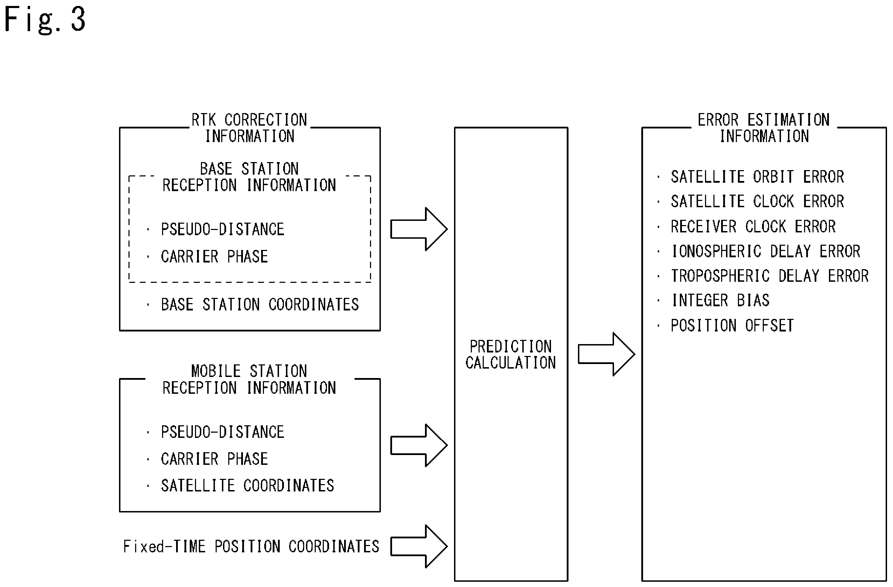

FIG. 3 is a conceptual diagram of derivation of error estimation information. The error estimation information is derived by the second calculation unit 213 through prediction calculation based on the RTK correction information, the mobile station reception information, and the fixed-time position coordinates. The RTK correction information used to derive the error estimation information includes at least the pseudo-distance and the carrier phase of the base station reception information and the base station coordinates. The mobile station reception information used for deriving the error estimation information includes at least a pseudo-distance, a carrier phase, and satellite coordinates.

Examples of the error estimation information include a satellite orbit error, a satellite clock error, a reception unit clock error, an ionospheric delay error, a tropospheric delay error, an integer bias, a position offset, and the like. The error estimation information of the present disclosure includes at least one selected from a satellite orbit error, a satellite clock error, a reception unit clock error, an ionospheric delay error, a tropospheric delay error, an integer bias, and a position offset. In the error estimation information, the estimation information of the error accompanied by the temporal change is information which is likely to have an influence on derivation of estimated position information of the mobile station 20 to be described later. Therefore, the error estimation information preferably includes estimation information of an error with a temporal change.

Examples of the error with a temporal change include a satellite orbit error, a satellite clock error, a reception unit clock error, an ionospheric delay error, and a tropospheric delay error. In particular, the ionospheric delay error and the tropospheric delay error have a large influence on derivation of estimated position information of the mobile station 20 to be described later. Therefore, it is more preferable that the error estimation information includes at least the ionospheric delay error and the tropospheric delay error.

[Derivation of Estimated Position Information]

The estimated position information is position information of the mobile station 20 derived by correcting an error of the mobile station reception information with the error estimation information without using the RTK correction information. The estimated position information can be applied to automatic traveling of the tractor 22 as the position information of the mobile station 20 instead of the fixed-time position coordinate as the positioning information described above. The estimated position information includes first estimated position information and second estimated position information.

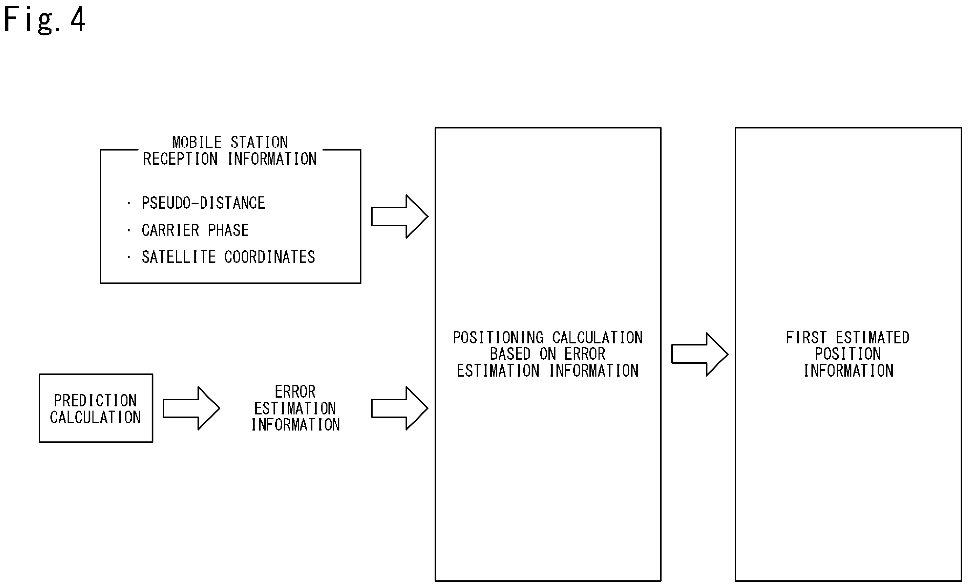

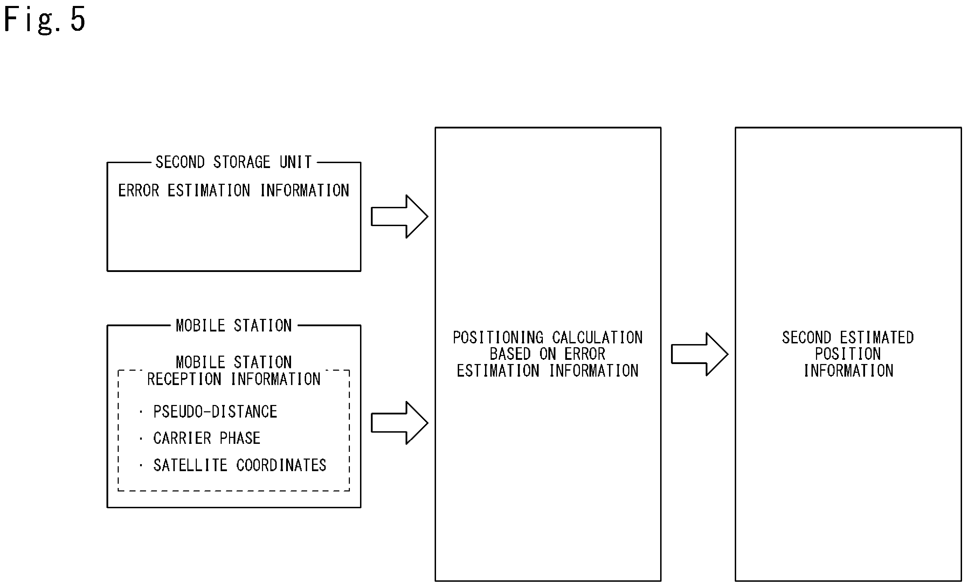

FIG. 4 is a conceptual diagram of derivation of the first estimated position information. FIG. 5 is a conceptual diagram of derivation of the second estimated position information. Both the first estimated position information and the second estimated position information are derived by positioning calculation based on the error estimation information by the second calculation unit 213. In the positioning calculation for deriving the first estimated position information, the mobile station reception information received by the mobile station 20 and the error estimation information derived by prediction calculation by the second calculation unit 213 illustrated in FIG. 3 are used as input information. In the positioning calculation for deriving the second estimated position information, the mobile station reception information received by the mobile station 20 and the error estimation information stored in the second storage unit 212 are used as input information. The mobile station reception information used for deriving the estimated position information includes at least a pseudo-distance, a carrier phase, and satellite coordinates. The error estimation information used for deriving the estimated position information preferably includes estimation information of an error accompanied by the above-described temporal change, and particularly preferably includes at least the ionospheric delay error and the tropospheric delay error.

The RTK-GNSS positioning system 1 can derive the position information of the mobile station 20 as the positioning information, the first estimated position information, and the second estimated position information. The positioning information is the RTK correction information, and the first estimated position information and the second estimated position information are error estimation information and corrected position information. Thus, the positioning information, the first estimated position information, and the second estimated position information are more accurate position information of the mobile station 20 than position information obtained by GNSS single positioning. The second estimated position information is derived using the error estimation information stored in the second storage unit 212. Accordingly, the RTK-GNSS positioning system 1 can derive the second estimated position information even when at least one of reception of the base station reception information by the first reception unit 11 of the base station 10, transmission of the RTK correction information by the transmission unit 14 of the base station 10, and reception of the RTK correction information by the third reception unit 214 of the mobile station 20 becomes impossible, and the RTK correction information is not receivable. That is, the RTK-GNSS positioning system 1 can derive highly accurate position information of the mobile station 20 regardless of the communication states of the first reception unit 11, the transmission unit 14, and the third reception unit 214. Therefore, with the RTK-GNSS positioning system 1, the tractor 22 can continue to automatically travel even in a state where the mobile station 20 is unable to receive the RTK correction information transmitted from the base station 10. Thus, work efficiency and work accuracy of the tractor 22 are improved.

[Arithmetic Expression of Prediction Operation]

The prediction calculation of the error estimation information by the second calculation unit 213 illustrated in FIG. 3 is executed using, for example, a relational expression represented by the following Expression I.

$$[\text{Observation vector}] = Amn \times [\text{State vector}] + [\text{Noise vector}]... \quad \text{Expression I}$$

(In Expression I, for example,

Amn is a matrix of m rows and n columns,
an element of an observation vector includes the base station reception information, the mobile station reception information, the RTK correction information, fixed-time position coordinates of the mobile station, and base station coordinates,
elements of the state vector includes the error estimation information, and
elements of the noise vector include observation noise. Note that other elements or contents may be further included, and some of these elements or contents need not be included.)

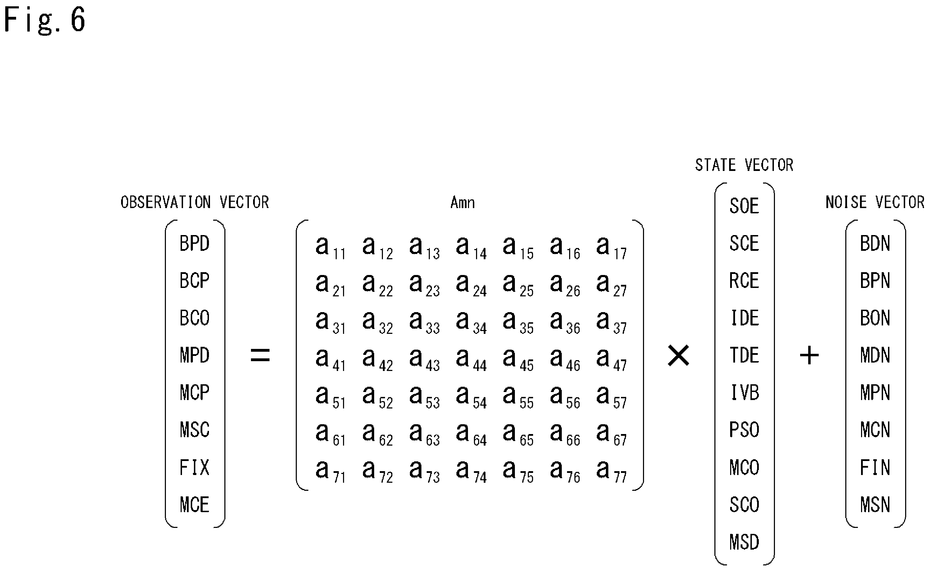

FIG. 6 is an explanatory diagram illustrating details of Expression I. For convenience of illustration, Amn is illustrated in FIG. 6 as a matrix of 7 rows and 7 columns, but the present invention is not limited thereto, and Amn may be a matrix of 12n + 6 rows and 12n + 13 columns (n is the number of satellites) or the like. The contents of respective elements of the observation vector, the state vector, and the noise vector illustrated in FIG. 6 are illustrated below. Note that other elements or contents may be further included, and some of these elements or contents need not be included.

(Observation Vector)

BPD:    Pseudo-distance received by base station
BCP:    Carrier phase received by base station
BCO:    Base station coordinates
MPD:    Pseudo-distance received by mobile station
MCP:    Carrier phase received by mobile station
MSC:    Satellite coordinates received by mobile station
FIX:    Fixed-time position coordinates of mobile station
MCE:    Satellite clock error received by mobile station

(State Vector)

SOE:    Satellite orbital error
SCE:    Satellite clock error
RCE:    Reception unit clock error

IDE:     Ionospheric delay error
TDE:     Tropospheric delay error
IVB:     Integer bias
PSO:     Position offset
MCO:     Mobile station coordinate
SCO:     Satellite coordinates
MSD:     Shift amount of satellite clock error received by mobile station

(Noise Vector)

BDN:     Pseudo-distance observation noise received by base station
BPN:     Observation noise of carrier phase received by base station
BON:     Observation noise of base station coordinates
MDN:     Pseudo-distance observation noise received by mobile station
MPN:     Observation noise of carrier phase received by mobile station
MCN:     Observation noise of satellite coordinates received by mobile station
FIN:     Observation noise of fixed-time position coordinates of mobile station
MSN:     Observation noise of satellite clock error received by mobile station

Expression I can be appropriately set on the basis of information obtained from RTK-GNSS positioning using the conventional RTK method and a satellite SAT. The elements of the observation vector and the noise vector correspond to input information of the prediction calculation in the derivation of the error estimation information illustrated in FIG. 3. The elements of the state vector correspond to the error estimation information output by the prediction calculation in the derivation of the error estimation information illustrated in FIG. 3.

In FIG. 6, examples of the state vector include a satellite orbit error, a satellite clock error, a reception unit clock error, an ionospheric delay error, a tropospheric delay error, an integer bias, a position offset, mobile station coordinates, satellite coordinates, and a shift amount of the satellite clock error received by the mobile station, but are not limited thereto. As described above, the elements of the state vector correspond to the error estimation information. Therefore, it is preferable that the state vector includes at least one of errors accompanied by a temporal change. The state vector particularly preferably includes at least the ionospheric delay error and the tropospheric delay error.

[Relationship between Reception State of Base Station and Each Piece of Information, and Flow of Deriving Each Piece of Information]

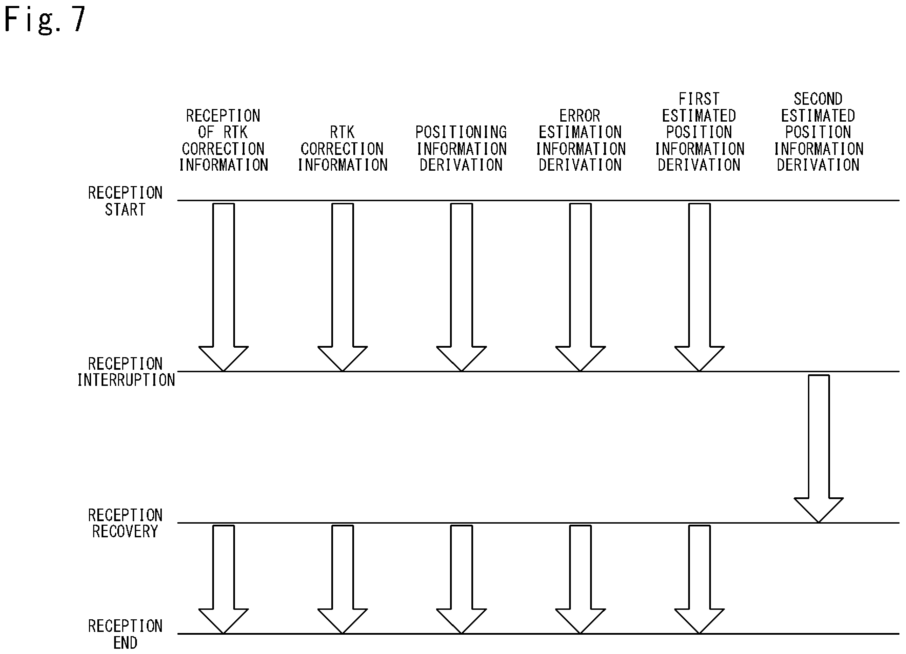

FIG. 7 is a conceptual diagram illustrating a relationship between a reception state of the RTK correction information of the mobile station 20 and each piece of derived information. Each line illustrated in FIG. 7 indicates time points of reception start, reception interruption, reception recovery, and reception end of the RTK correction information from the transmission unit 14 of the base station 10 by the third reception unit 214 of the mobile station 20. Note that the mobile station reception information from the satellite SAT by the second reception unit 211 of the mobile station 20 is receivable from the aforementioned reception start to reception end (not illustrated).

As illustrated in FIG. 7, the RTK correction information is received by the third reception unit 214 of the mobile station 20 at a time point other than from the reception interruption to the reception recovery. In a state where the RTK correction information is receivable, the RTK correction information is derived by the first calculation unit 13, and positioning information derivation, error estimation information derivation, and first estimated position information derivation are derived by the second calculation unit 213.

As illustrated in FIG. 7, the RTK correction information is not receivable by the third reception unit 214 of the mobile station 20 from the reception interruption to the reception recovery. In a state where the RTK correction information is not receivable, the second estimated position information is derived by the second calculation unit 213.

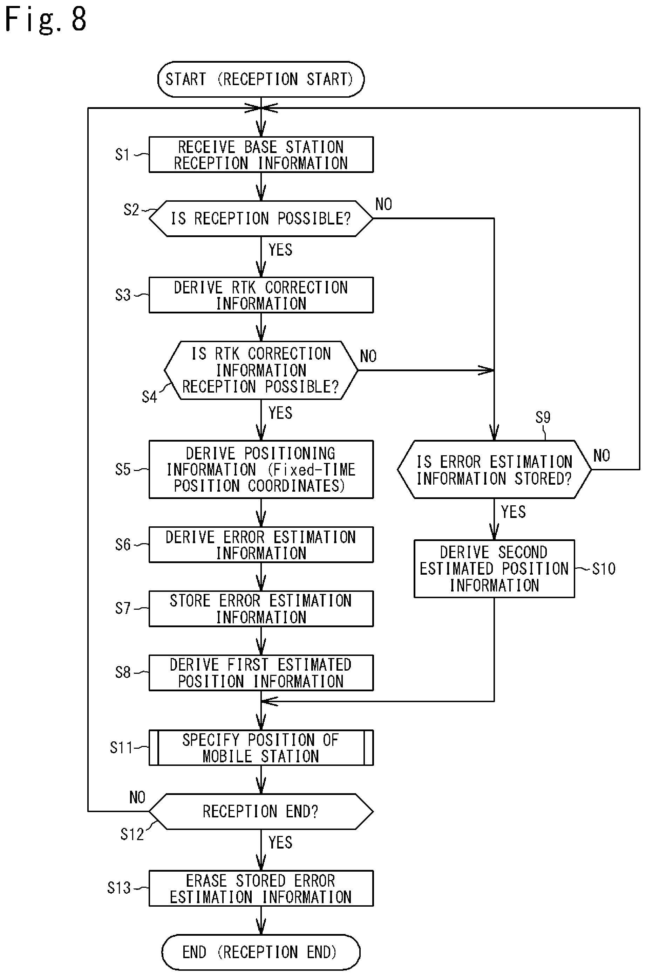

FIG. 8 is a flowchart illustrating a flow of deriving each piece of information illustrated in FIG. 7. The RTK-GNSS positioning system 1 is configured to execute steps S1 to S13 illustrated in FIG. 8 from start (reception start) to end (reception end).

As illustrated in FIG. 8, when reception of the base station reception information in the RTK-GNSS positioning system 1 is started, S1 that is a step of receiving the base station reception information from the satellite SAT by the first reception unit 11 of the base station 10 is executed. Next, the first calculation unit 13 of the base station 10 executes S2 that is a step of determining whether or not the base station reception information is received in S1. When it is determined in S2 that the base station reception information is received, the first calculation unit 13 executes S3 that is a step of deriving the RTK correction information. Note that, when it is determined in S2 that the base station reception information is not received, the determination result is transmitted by the transmission unit 14 of the base station 10 and received by the third reception unit 214 in the positioning detection device 21 of the mobile station 20.

In the positioning detection device 21 of the mobile station 20, the second calculation unit 213 executes step S3 for determining whether or not the third reception unit 214 receives the RTK correction information derived in step S3. When it is determined in S4 that the RTK correction information is received, the second calculation unit 213 executes S5 that is a step of deriving the fixed-time position coordinates as the positioning information of the mobile station 20 on the basis of the RTK correction information derived in S3 and the mobile station reception information received by the second reception unit 211 of the positioning detection device 21. Next, S6 that is a step of deriving error estimation information is executed by the second calculation unit 213 on the basis of the RTK correction information derived in S3, the fixed-time position coordinates derived in S5, and the mobile station reception information. The error estimation information derived in S6 is stored in the second storage unit 212 by execution of S7 that is a step of storing the error estimation information in the second storage unit 212 of the positioning detection device 21. In addition, the second calculation unit 213 executes S8 that is a step of deriving the first estimated position information of the mobile station 20 on the basis of the mobile station reception information and the error estimation information derived in S6.

When it is determined in S2 or S4 that the base station reception information or the RTK correction information is not received, the second calculation unit 213 of the positioning detection device 21 executes S9 that is a step of determining whether or not the error estimation information is stored in the second storage unit 212. When it is determined in S9 that the error estimation information is stored, the second calculation unit 213 executes S10 that is a step of deriving the second estimated position information of the mobile station 20 on the basis of the mobile station reception information and the error estimation information stored in the second storage unit 212.

When it is determined that the error estimation information is not stored in S9, the process returns to S1 in which the first reception unit 11 of the base station 10 receives the base station reception information. Note that, although not illustrated in FIG. 8, the RTK-GNSS positioning system 1 ends the reception as a reception error of the base station reception information when the determination that the error estimation information is not stored in S9 continues predetermined times or for a predetermined period.

After S8 or S10, the second calculation unit 213 executes S11 that is a step of specifying the position information of the mobile station 20 on the basis of the positioning information derived in S5, the first estimated position information derived in S8, and the second estimated position information derived in S10. Details of the specification of the position information of the mobile station 20 in S11 will be described in the specification of the position information of the mobile station described later. After S11, S12 that is a step of determining whether or not the reception of the base station reception information is ended is executed. When it is determined in S12 that the reception is not ended, the process returns to S1. When it is determined in S12 that the reception is ended, S13 that is a step of erasing the error estimation information stored in the second storage unit 212 is executed, and the reception of the base station reception information in the RTK-GNSS positioning system 1 is ended.

[Identification of Position Information of Mobile Station]

(Priority Adoption of Positioning Information or First Estimated Position Information)

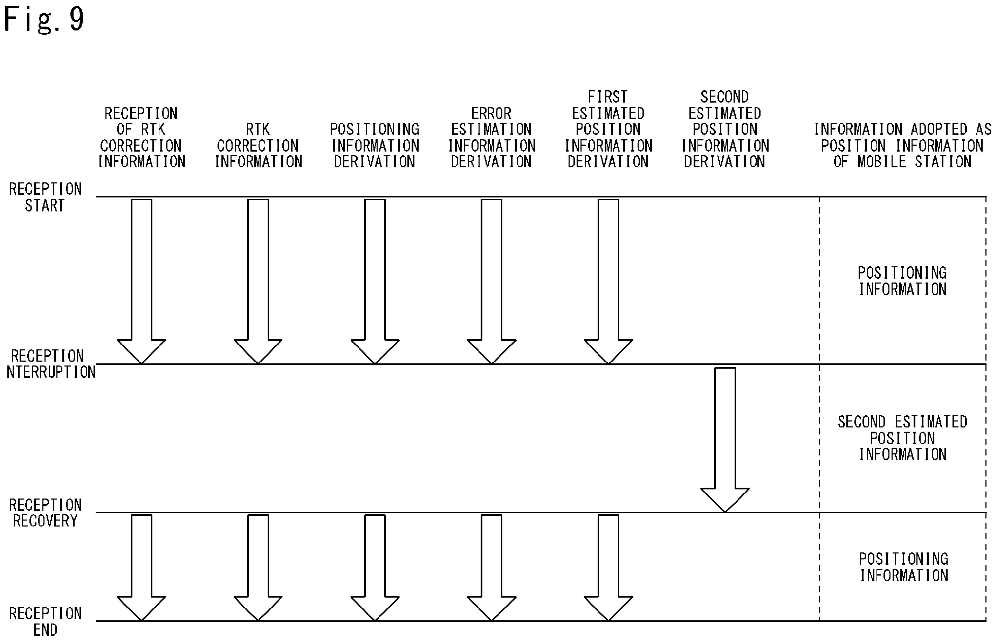

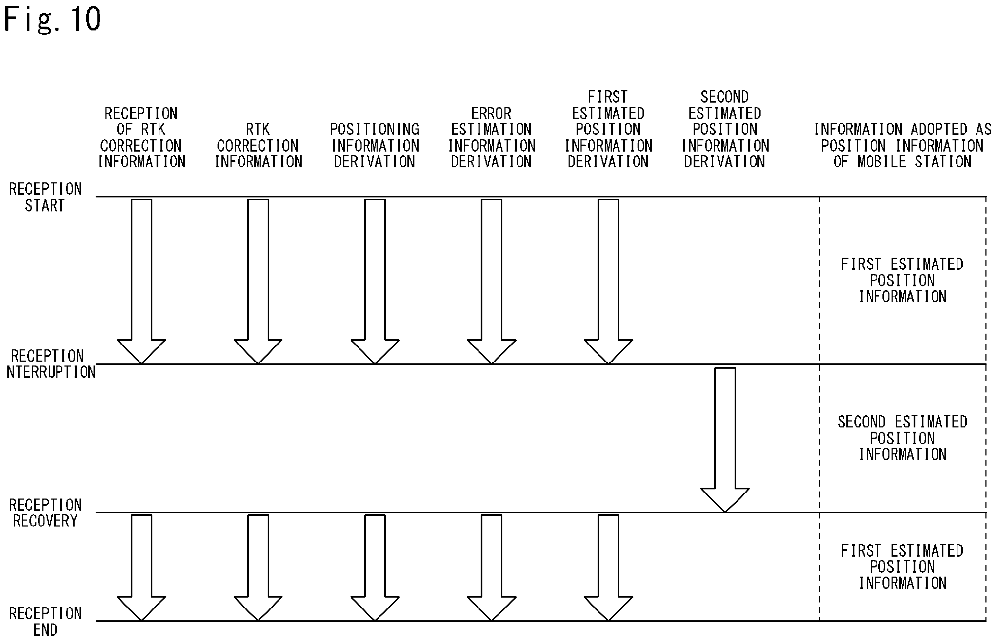

FIG. 9 is an explanatory diagram in a case where the positioning information is preferentially adopted as the position information of the mobile station 20. FIG. 10 is an explanatory diagram in a case where the first estimated position information is preferentially adopted as the position information of the mobile station 20. FIG. 9 and FIG. 10 are diagrams in which information adopted for specifying the position information of the mobile station 20 in a state where the RTK correction information is receivable and a state where the RTK correction information is not receivable is added to the relationship between the reception state of the RTK correction information of the mobile station 20 and each piece of derived information illustrated in FIG. 7.

In the RTK-GNSS positioning system 1, in a state where the RTK correction information is not receivable, the second estimated position information is derived as the position information of the mobile station. In other words, in a state where the RTK correction information is not receivable, the positioning information and the first estimated position information are not derived. Therefore, in the RTK-GNSS positioning system 1, the second estimated position information is adopted to specify the position information of the mobile station 20 in a state where the RTK correction information is not receivable. That is, in FIG. 8 described above, when it is determined in S2 or S4 that the base station reception information or the RTK correction information is not received, the second estimated position information is adopted as the position information of the mobile station 20 in the position information specifying step of the mobile station 20 in S11. Note that, as described above, the second estimated position information is position information of the mobile station 20 with higher accuracy than position information obtained by GNSS single positioning. Further, the second estimated position information is derived even in a state where the RTK correction information is not receivable. Accordingly, automatic traveling of the tractor 22 can be continued in a state where the RTK correction information is not receivable. As a result, work efficiency and work accuracy of the tractor 22 are improved.

In a state where the RTK correction information is receivable, the positioning information and the first estimated position information are derived as the position information of the mobile station. As illustrated in FIG. 9, in a case where the positioning information is preferentially adopted, the positioning information is adopted as the position information of the mobile station 20 in a state where the RTK correction information is receivable. That is, in the method of preferentially adopting the positioning information, when it is determined in S4 of FIG. 8 described above that the RTK correction information is receivable, the positioning information is adopted as the position information of the mobile station 20 in the position information specifying step of the mobile station 20 in S11. That is, in a state where the RTK correction information is receivable, similarly to the RTK-GNSS positioning system using the conventional RTK method, the fixed-time position coordinates corrected on the basis of the RTK correction information are used as the position information of the mobile station 20. Thus, with the RTK-GNSS positioning system 1 that preferentially adopts the positioning information, it is possible to ensure the accuracy of the position information of the mobile station 20 in a state where the RTK correction information is receivable.

As illustrated in FIG. 10, when the first estimated position information is preferentially adopted, the first estimated position information is adopted as the position information of the mobile station 20 in a state where the RTK correction information is receivable. That is, in the method of preferentially adopting the first estimated position information, when it is determined in S4 of FIG. 8 described above that the RTK correction information is receivable, the first estimated position information is adopted as the position information of the mobile station 20 in the position information specifying step of the mobile station 20 in S11. In this case, regardless of the reception state of the base station reception information, the first estimated position information or the second estimated position information derived on the basis of the error estimation information and the mobile station reception information is adopted as the position information of the mobile station 20. At the time of switching between a state where the RTK correction information is receivable and a state where the RTK correction information is not receivable, in the method of preferentially adopting the positioning information illustrated in FIG. 9 described above, the positioning information and the second estimated position information may deviate from each other in the position information of the mobile station 20. This deviation is mainly caused by that information for correcting the mobile station reception information is different from the error estimation information in the second estimated position information while the positioning information is the RTK correction information. Both the first estimated position information and the second estimated position information are error estimation information for correcting the mobile station reception information. Thus, the deviation of the position information of the mobile station 20 at the time of the switching is suppressed. Therefore, with the RTK-GNSS positioning system 1 that preferentially adopts the first estimated position information, the continuity of the position information of the mobile station 20 is improved.

As illustrated in FIG. 9 and FIG. 10, the RTK-GNSS positioning system 1 derives both the positioning information and the first estimated position information when the RTK correction information is receivable even when one of the positioning information and the first estimated position information is preferentially adopted. However, the RTK-GNSS positioning system of the present disclosure is only required to derive the RTK correction information and the error estimation information when the RTK correction information is receivable, and is not limited to deriving both the positioning information and the first estimated position information. For example, a mode may be employed in which, when the RTK-GNSS positioning system of the present disclosure preferentially adopts the positioning information, the RTK-GNSS positioning system does not derive the first estimated position information. Similarly, a mode may be employed in which, when the RTK-GNSS positioning system of the present disclosure preferentially adopts the first estimated position information, the RTK-GNSS positioning system does not derive the positioning information.

(Transition and adoption from positioning information to first estimated position information)

As described above, in a case where the positioning information is preferentially adopted, the accuracy of the position information of the mobile station 20 when the RTK correction information is receivable is secured, but the continuity of the position information of the mobile station 20 at the time of switching between a state where the RTK correction information is receivable and a state where the RTK correction information is not receivable may decrease. Conversely, in a case where the first estimated position information is preferentially adopted, the continuity of the position information of the mobile station 20 at the time of switching between a state where the RTK correction information is receivable and a state where the RTK correction information is not receivable is improved, but the accuracy of the position information of the mobile station 20 when the RTK correction information is receivable may be deteriorated. The decrease in accuracy and continuity of the position information of the mobile station 20 is mainly caused by a difference between the positioning information and the first estimated position information.

The inventors of the present invention have found that (i) the difference between the positioning information and the first estimated position information is large immediately after the start of reception by the RTK-GNSS positioning system 1 and becomes small with the lapse of time from the start of reception, (ii) the difference between the positioning information and the first estimated position information is reduced with the lapse of time due to stabilization of the error estimation information, and (iii) once the error estimation information is stabilized, the difference between the positioning information and the first estimated position information is hardly enlarged thereafter. From the knowledge of the present inventors, when the RTK correction information is receivable, the accuracy and the continuity of the position information of the mobile station 20 can be improved by a method of transition and adoption from the positioning information to the first estimated position information in which the positioning information is adopted as the position information of the mobile station 20 before the error estimation information is stabilized, and the first estimated position information is adopted as the position information of the mobile station 20 after the error estimation information is stabilized.

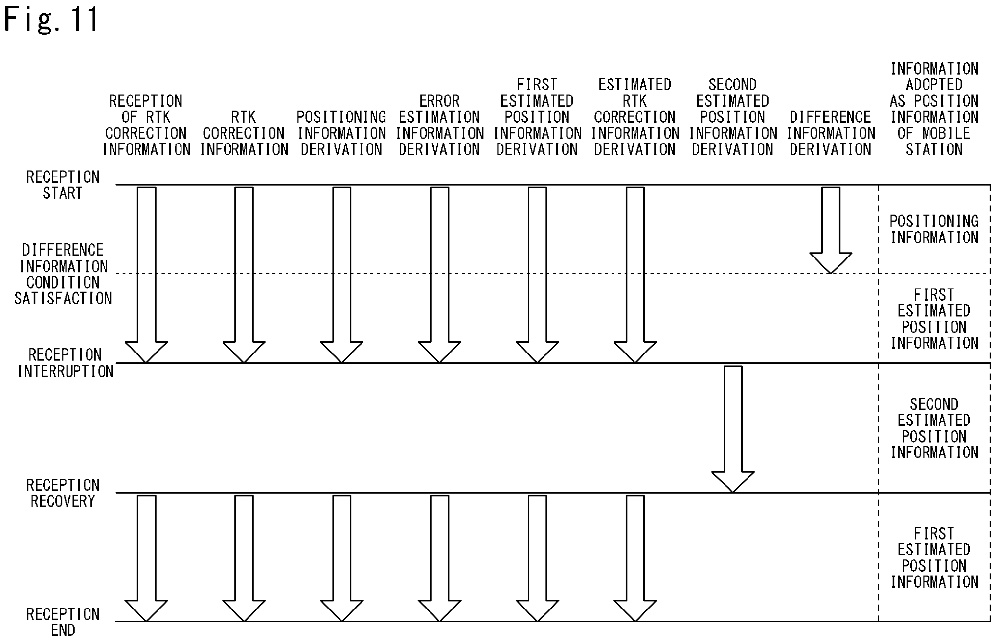

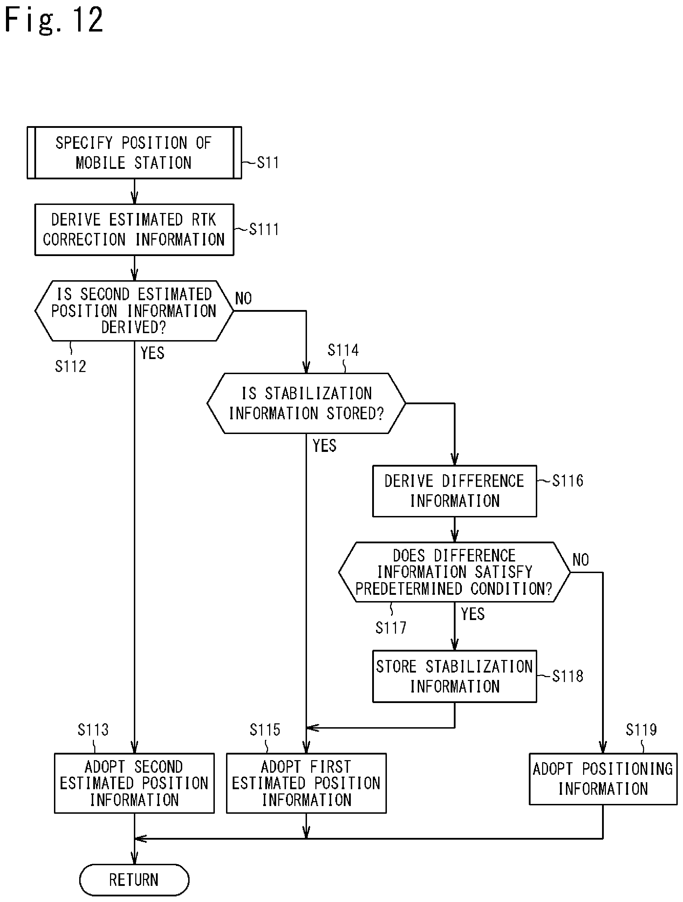

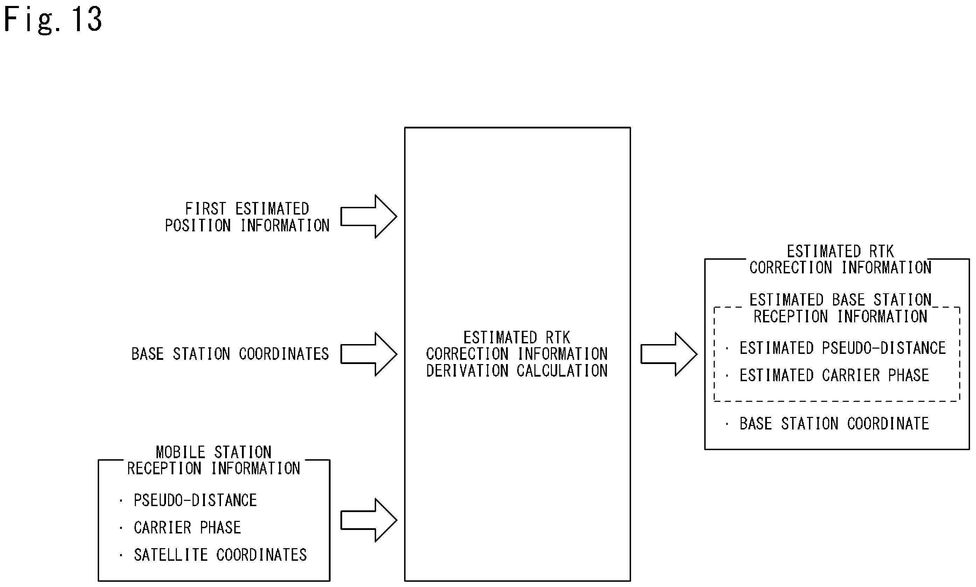

FIG. 11 is an explanatory diagram in a case of transition and adoption from the positioning information to the first estimated position information as the position information of the mobile station 20. FIG. 12 is a flowchart illustrating a flow of processing executed in S11 of FIG. 8 in the transition and adoption of FIG. 11. FIG. 13 is an explanatory diagram illustrating derivation of estimated RTK correction information.

As illustrated in FIG. 11, in a case of transition and adoption of the position information of the mobile station 20 from the positioning information to the first estimated position information (hereinafter, it may be simply referred to as "transition and adoption") when the RTK correction information is receivable, the RTK-GNSS positioning system 1 derives difference information from the start of reception until difference information described later satisfies a predetermined condition. Then, from the start of reception until the difference information satisfies a predetermined condition, the positioning information is adopted as the position information of the mobile station 20 in a state where the RTK correction information is receivable. Note that, from the start of reception until the difference information satisfies a predetermined condition, the second estimated position information is adopted as the position information of the mobile station 20 (not illustrated) in a state where the RTK correction information is not receivable. After the difference information satisfies the predetermined condition, the first estimated position information is adopted as the position information of the mobile station 20 in a state where the RTK correction information is receivable, and the second estimated position information is adopted as the position information of the mobile station 20 in a state where the RTK correction information is not receivable, similarly to the method of preferentially adopting the first estimated position information illustrated in FIG. 10 described above.

As illustrated in FIG. 12, in the RTK-GNSS positioning system 1, steps S111 to S119 are executed in S11 of FIG. 8 in a case where the transition and adoption method is applied. Step S111 is a step of deriving the estimated RTK correction information. As illustrated in FIG. 13, the estimated RTK correction information is derived on the basis of the first estimated position information, the base station coordinates, and the mobile station reception information. Note that a pseudo-distance included in the mobile station reception information is derived using receiver coordinates, a satellite clock error shift amount, a position offset, a receiver clock error, satellite coordinates, a satellite orbit error, a satellite clock error, an ionospheric delay error, and a tropospheric delay error, and a carrier phase included in the mobile station reception information is derived using an integer bias in addition to these. Estimated RTK correction information derivation calculation, which is calculation for deriving the estimated RTK correction information, can be constructed on the basis of the positioning calculation based on the RTK correction information illustrated in FIG. 2. More specifically, on the basis of the positioning calculation based on the RTK correction information, an arithmetic expression for obtaining the RTK correction information by back calculation is constructed on the basis of the positioning information and the mobile station reception information. The above-described arithmetic expression for obtaining the RTK correction information by back calculation can be applied as the estimated RTK correction information derivation calculation.

After the estimated RTK correction information is derived in S111, S112 that is a step of determining whether or not the second estimated position information is derived is executed. When it is determined in S112 that the second estimated position information is derived, the process proceeds to S113, and the second estimated position information is adopted as the position information of the mobile station 20.

When it is determined in S112 that the second estimated position information is not derived, S114 that is a step of determining whether or not stabilization information described later is recorded in the second storage unit 212 of the positioning detection device 21 is executed. When it is determined in S114 that the stabilization information is recorded, the processing proceeds to S115, and the first estimated position information is adopted as the position information of the mobile station 20.

When it is determined that the stabilization information is not recorded in S114, S116 that is a step of deriving difference information that is information regarding a difference between the RTK correction information and the estimated RTK correction information is executed. As illustrated in FIG. 2, the RTK correction information includes at least a pseudo-distance, a carrier phase, and base station coordinates of the base station reception information. As illustrated in FIG. 13, the estimated RTK correction information includes at least an estimated pseudo-distance, and an estimated carrier phase and base station coordinates of the estimated base station reception information. The RTK correction information and the estimated RTK correction information both include base station coordinates. Thus, the base station coordinates are offset in the difference information. Therefore, the difference information is information regarding a difference between the base station reception information and the estimated base station reception information. More specifically, the difference information includes at least information regarding the difference between the pseudo-distance and the estimated pseudo-distance and information regarding the difference between the carrier phase and the estimated carrier phase.

In S116, after the difference information is derived, S117 that is a step of determining whether or not the difference information satisfies a predetermined condition is executed. In the RTK-GNSS positioning system 1, in S117, the second calculation unit 213 determines whether or not the difference information satisfies a predetermined condition by comparing the pseudo-distance and the carrier phase of the mobile station reception information with the pseudo-distance and the carrier phase of the base station reception information.

When it is determined in S117 that the difference information satisfies the predetermined condition, S118 that is a step of storing stabilization information indicating that the difference information satisfies the predetermined condition in the second storage unit 212 is executed. After the stabilization information is stored in the second storage unit 212 in S118, the process proceeds to S114, and the first estimated position information is adopted as the position information of the mobile station 20. Note that, in the RTK-GNSS positioning system 1 applying the transition and adoption, in step S13 in FIG. 8, the stabilization information is also deleted from the second storage unit 212 (not illustrated) in addition to the error estimation information.

When it is determined in S117 that the difference information does not satisfy the predetermined condition, the processing proceeds to S119, and the positioning information is adopted as the position information of the mobile station 20.

[Other Modifications]

The embodiment disclosed herein is illustrative in all respects and is not restrictive. The scope of rights of the present invention is not limited to the above-described embodiments, and includes all modifications within the scope equivalent to the configurations described in the claims.

**REFERENCE SIGNS LIST**

1 positioning system
10 base station
11 first reception unit
12 first storage unit
13 first calculation unit
14 transmission unit
20 mobile station
21 positioning detection device
211 second reception unit
212 second storage unit
213 second calculation unit
214 third reception unit
221 constituent device
22 tractor

**Claims**

1. An RTK-GNSS positioning system (1) comprising:

a base station (10) including a first reception unit (11) for receiving base station reception information from a satellite (SAT);
a mobile station (20) including a second reception unit (211) for receiving mobile station reception information from a satellite (SAT);
a first calculation unit (13) for deriving RTK correction information on a basis of the base station reception information;
a second calculation unit (213) for deriving error estimation information for correcting an error of the mobile station reception information on a basis of the RTK correction information and the mobile station reception information; and
a storage unit for storing the error estimation information.

2. The RTK-GNSS positioning system (1) according to claim 1, wherein

the base station (10) includes a transmission unit (14) for transmitting the RTK correction information to the mobile station (20),
the mobile station (20) includes a third reception unit (214) for receiving the RTK correction information transmitted from the base station (10), and
the second calculation unit (213),
in a state where the mobile station (20) is able to receive the RTK correction information transmitted from the base station (10),
derives positioning information of the mobile station (20) on a basis of the RTK correction information and the mobile station reception information, and
derives first estimated position information of the mobile station (20) on a basis of the error estimation information derived on a basis of the RTK correction information and the mobile station reception information, and the mobile station reception information, and
in a state where the mobile station (20) is unable to receive the RTK correction information transmitted from the base station (10),
derives second estimated position information of the mobile station (20) on a basis of the error estimation information stored in the storage unit and the mobile station reception information.

3. The RTK-GNSS positioning system (1) according to claim 2, wherein

the second calculation unit (213),
in a state where the mobile station (20) is able to receive the RTK correction information transmitted from the base station (10), adopts the positioning information as position information of the mobile station (20), and
in a state where the mobile station (20) is unable to receive the RTK correction information transmitted from the base station (10), adopts the second estimated position information as the position information of the mobile station (20).

4. The RTK-GNSS positioning system (1) according to claim 2, wherein

the second calculation unit (213),
in a state where the mobile station (20) is able to receive the RTK correction information transmitted from the base station (10), adopts the first estimated position information as position information of the mobile station (20), and
in a state where the mobile station (20) is unable to receive the RTK correction information transmitted from the base station (10), adopts the second estimated position information as the position information of the mobile station (20).

5. The RTK-GNSS positioning system (1) according to claim 2, wherein

the second calculation unit (213),
in a state where the mobile station (20) is able to receive the RTK correction information transmitted from the base station (10),
derives estimated RTK correction information on a basis of the error estimation information,
derives difference information between the RTK correction information and the estimated RTK correction information,
adopts the positioning information as position information of the mobile station (20) until the difference information satisfies a predetermined condition, and
after the difference information satisfies the predetermined condition, adopts the first estimated position information as the position information of the mobile station (20).

6. The RTK-GNSS positioning system (1) according to any one of claims 1 to 5, wherein the error estimation information includes estimation information of an error with a temporal change.

7. The RTK-GNSS positioning system (1) according to claim 6, wherein the error accompanied by the temporal change includes at least an ionospheric delay error and a tropospheric delay error.

8. The RTK-GNSS positioning system (1) according to any one of claims 1 to 7, wherein

the base station (10) includes the first calculation unit (13), and
the mobile station (20) includes the second calculation unit (213) and the storage unit.

9. The RTK-GNSS positioning system (1) according to any one of claims 1 to 8, wherein the second calculation unit (213) derives the error estimation information on a basis of a relational expression illustrated in Expression I,

$$[\text{Observation vector}] = Amn \times [\text{State vector}] + [\text{Noise vector}] \cdots \quad \text{Expression I}$$

(In Expression I,

A is a matrix of m rows and n columns,
elements of the observation vector include the mobile station reception information, the RTK correction information including the base station reception information and base station coordinates, and fixed-time position coordinates of the mobile station (20),
elements of the state vector include at least the error estimation information, and
elements of the noise vector include observation noise).

10. The RTK-GNSS positioning system (1) according to claim 9, wherein

the base station reception information includes at least a pseudo-distance and a carrier phase, and
the mobile station reception information includes at least a pseudo-distance, a carrier phase, and satellite coordinates.

11. The RTK-GNSS positioning system (1) according to claim 9 or 10, wherein the error estimation information includes at least an ionospheric delay error and a tropospheric delay error.

12. An RTK-GNSS positioning method comprising:

Receiving base station reception information (S1) and mobile station reception information from a satellite (SAT);
Deriving RTK correction information on a basis of the base station reception information (S3); and
Deriving error estimation information for correcting an error of the mobile station reception information without using the RTK correction information on a basis of the RTK correction information and the mobile station reception information (S6).

13. The RTK-GNSS positioning method according to claim 12, comprising a step of deriving estimated position information of the mobile station on a basis of the error estimation information and the mobile station reception information (S8; S10).

Fig.1

EP 4 707 871 A1

# Fig.2

RTK CORRECTION INFORMATION

BASE STATION RECEPTION INFORMATION

· PSEUDO-DISTANCE
· CARRIER PHASE

· BASE STATION COORDINATES

MOBILE STATION RECEPTION INFORMATION

· PSEUDO-DISTANCE
· CARRIER PHASE
· SATELLITE COORDINATES

POSITIONING CALCULATION BASED ON RTK CORRECTION INFORMATION

POSITIONING INFORMATION (Fixed-TIME POSITION COORDINATES)

# Fig.3

RTK CORRECTION
INFORMATION

BASE STATION
RECEPTION INFORMATION

· PSEUDO-DISTANCE

· CARRIER PHASE

· BASE STATION COORDINATES

MOBILE STATION
RECEPTION INFORMATION

· PSEUDO-DISTANCE

· CARRIER PHASE

· SATELLITE COORDINATES

Fixed-TIME POSITION COORDINATES

PREDICTION
CALCULATION

ERROR ESTIMATION
INFORMATION

· SATELLITE ORBIT ERROR

· SATELLITE CLOCK ERROR

· RECEIVER CLOCK ERROR

· IONOSPHERIC DELAY ERROR

· TROPOSPHERIC DELAY ERROR

· INTEGER BIAS

· POSITION OFFSET

Fig. 4

MOBILE STATION
RECEPTION INFORMATION

· PSEUDO-DISTANCE

· CARRIER PHASE

· SATELLITE COORDINATES

PREDICTION
CALCULATION

ERROR
ESTIMATION
INFORMATION

POSITIONING CALCULATION
BASED ON ERROR
ESTIMATION INFORMATION

FIRST ESTIMATED
POSITION
INFORMATION

Fig. 5

SECOND STORAGE UNIT

ERROR ESTIMATION INFORMATION

MOBILE STATION

MOBILE STATION RECEPTION INFORMATION
- PSEUDO-DISTANCE
- CARRIER PHASE
- SATELLITE COORDINATES

POSITIONING CALCULATION BASED ON ERROR ESTIMATION INFORMATION

SECOND ESTIMATED POSITION INFORMATION

# Fig. 6

$$
\begin{array}{c} \text{OBSERVATION VECTOR} \\ \begin{pmatrix} \text{BPD} \\ \text{BCP} \\ \text{BCO} \\ \text{MPD} \\ \text{MCP} \\ \text{MSC} \\ \text{FIX} \\ \text{MCE} \end{pmatrix} \end{array}
=
\begin{array}{c} Amn \\ \begin{pmatrix} a_{11} & a_{12} & a_{13} & a_{14} & a_{15} & a_{16} & a_{17} \\ a_{21} & a_{22} & a_{23} & a_{24} & a_{25} & a_{26} & a_{27} \\ a_{31} & a_{32} & a_{33} & a_{34} & a_{35} & a_{36} & a_{37} \\ a_{41} & a_{42} & a_{43} & a_{44} & a_{45} & a_{46} & a_{47} \\ a_{51} & a_{52} & a_{53} & a_{54} & a_{55} & a_{56} & a_{57} \\ a_{61} & a_{62} & a_{63} & a_{64} & a_{65} & a_{66} & a_{67} \\ a_{71} & a_{72} & a_{73} & a_{74} & a_{75} & a_{76} & a_{77} \end{pmatrix} \end{array}
\times
\begin{array}{c} \text{STATE VECTOR} \\ \begin{pmatrix} \text{SOE} \\ \text{SCE} \\ \text{RCE} \\ \text{IDE} \\ \text{TDE} \\ \text{IVB} \\ \text{PSO} \\ \text{MCO} \\ \text{SCO} \\ \text{MSD} \end{pmatrix} \end{array}
+
\begin{array}{c} \text{NOISE VECTOR} \\ \begin{pmatrix} \text{BDN} \\ \text{BPN} \\ \text{BON} \\ \text{MDN} \\ \text{MPN} \\ \text{MCN} \\ \text{FIN} \\ \text{MSN} \end{pmatrix} \end{array}
$$

EP 4 707 871 A1

Fig. 7

# Fig. 8

START (RECEPTION START)

S1 — RECEIVE BASE STATION RECEPTION INFORMATION

S2 — IS RECEPTION POSSIBLE? → NO

YES

S3 — DERIVE RTK CORRECTION INFORMATION

S4 — IS RTK CORRECTION INFORMATION RECEPTION POSSIBLE? → NO

YES

S5 — DERIVE POSITIONING INFORMATION (Fixed-TIME POSITION COORDINATES)

S9 — IS ERROR ESTIMATION INFORMATION STORED? → NO

YES

S6 — DERIVE ERROR ESTIMATION INFORMATION

S10 — DERIVE SECOND ESTIMATED POSITION INFORMATION

S7 — STORE ERROR ESTIMATION INFORMATION

S8 — DERIVE FIRST ESTIMATED POSITION INFORMATION

S11 — SPECIFY POSITION OF MOBILE STATION

S12 — RECEPTION END? → NO

YES

S13 — ERASE STORED ERROR ESTIMATION INFORMATION

END (RECEPTION END)

# Fig. 9

EP 4 707 871 A1

| RECEPTION OF RTK CORRECTION INFORMATION | RTK CORRECTION INFORMATION | POSITIONING INFORMATION DERIVATION | ERROR ESTIMATION INFORMATION DERIVATION | FIRST ESTIMATED POSITION INFORMATION DERIVATION | SECOND ESTIMATED POSITION INFORMATION DERIVATION | INFORMATION ADOPTED AS POSITION INFORMATION OF MOBILE STATION |
|---|---|---|---|---|---|---|

RECEPTION START

POSITIONING INFORMATION

RECEPTION INTERRUPTION

SECOND ESTIMATED POSITION INFORMATION

RECEPTION RECOVERY

POSITIONING INFORMATION

RECEPTION END

# Fig. 10

EP 4 707 871 A1

Fig. 11

EP 4 707 871 A1

# Fig. 12

Flowchart:

SPECIFY POSITION OF MOBILE STATION —S11

↓

DERIVE ESTIMATED RTK CORRECTION INFORMATION —S111

↓

IS SECOND ESTIMATED POSITION INFORMATION DERIVED? — S112

NO → IS STABILIZATION INFORMATION STORED? — S114

YES ↓ (from IS SECOND ESTIMATED POSITION INFORMATION DERIVED?) → ADOPT SECOND ESTIMATED POSITION INFORMATION — S113

IS STABILIZATION INFORMATION STORED? — YES → ADOPT FIRST ESTIMATED POSITION INFORMATION — S115

IS STABILIZATION INFORMATION STORED? → DERIVE DIFFERENCE INFORMATION — S116

↓

DOES DIFFERENCE INFORMATION SATISFY PREDETERMINED CONDITION? — S117

YES → STORE STABILIZATION INFORMATION — S118 → ADOPT FIRST ESTIMATED POSITION INFORMATION — S115

NO → ADOPT POSITIONING INFORMATION — S119

ADOPT SECOND ESTIMATED POSITION INFORMATION — S113 → RETURN

# Fig. 13

FIRST ESTIMATED
POSITION INFORMATION ⟹

BASE STATION COORDINATES ⟹

```
ESTIMATED RTK
CORRECTION INFORMATION
DERIVATION CALCULATION
```

⟹

```
ESTIMATED RTK
CORRECTION INFORMATION

┌─ ESTIMATED BASE STATION ─┐
    RECEPTION INFORMATION

· ESTIMATED PSEUDO-DISTANCE

· ESTIMATED CARRIER PHASE
└──────────────────────────┘

· BASE STATION COORDINATE
```

```
MOBILE STATION
RECEPTION INFORMATION

· PSEUDO-DISTANCE

· CARRIER PHASE

· SATELLITE COORDINATES
```

⟹

Europäisches
Patentamt

European
Patent Office

Office européen
des brevets

# EUROPEAN SEARCH REPORT

**Application Number**

**EP 25 19 7777**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/196022 A1 (REZAEI SHAHRAM [US] ET AL) 27 June 2019 (2019-06-27)<br>* abstract *<br>* figure 1 *<br>* paragraphs [0003] - [0004] *<br>* paragraphs [0017] - [0081] *<br>----- | 1-13 | INV.<br>G01S19/41<br>G01S19/43<br><br>ADD.<br>G01S19/04<br>G01S19/07 |
| X | US 2011/025555 A1 (WHITEHEAD MICHAEL L [US]) 3 February 2011 (2011-02-03)<br>* abstract *<br>* figures 2, 3 *<br>* paragraphs [0014] - [0026] *<br>* paragraphs [0040] - [0073] *<br>* paragraphs [0079] - [0081] *<br>----- | 1-13 | |
| X | US 2017/299730 A1 (LIE F ADHIKA PRADIPTA [US] ET AL) 19 October 2017 (2017-10-19)<br>* the whole document *<br>----- | 1-13 | |

**TECHNICAL FIELDS SEARCHED (IPC)**

G01S

The present search report has been drawn up for all claims

| Place of search | Date of completion of the search | Examiner |
|---|---|---|
| Munich | 27 January 2026 | Haugg, Sabine |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
........................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 19 7777

This annex lists the patent family members relating to the patent documents cited in the above-mentioned European search report.
The members are as contained in the European Patent Office EDP file on
The European Patent Office is in no way liable for these particulars which are merely given for the purpose of information.

27-01-2026

| Patent document cited in search report | Publication date | Patent family member(s) | Publication date |
|---|---|---|---|
| US 2019196022 A1 | 27-06-2019 | US 2019196022 A1 | 27-06-2019 |
| | | WO 2019121746 A1 | 27-06-2019 |
| US 2011025555 A1 | 03-02-2011 | EP 2460029 A1 | 06-06-2012 |
| | | US 2011025555 A1 | 03-02-2011 |
| | | WO 2011014431 A1 | 03-02-2011 |
| US 2017299730 A1 | 19-10-2017 | BR 112017028219 A2 | 28-08-2018 |
| | | CN 107710016 A | 16-02-2018 |
| | | EP 3314302 A1 | 02-05-2018 |
| | | US 2017299730 A1 | 19-10-2017 |
| | | WO 2017004033 A1 | 05-01-2017 |

EPO FORM P0459

For more details about this annex : see Official Journal of the European Patent Office, No. 12/82

**EP 4 707 871 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018105708 A